Europäisches Patentamt

(19) European Patent Office

Office européen des brevets

(11) Publication number: **0 000 430**
**B1**

(12) **EUROPEAN PATENT SPECIFICATION**

(45) Date of publication of patent specification: **12.08.81**

(51) Int. Cl.³: **C 08 F 14/00, C 08 F 2/16**

(21) Application number: **78300113.4**

(22) Date of filing: **30.06.78**

(54) Vinyl halide polymerization process.

(30) Priority: **15.07.77 AU 876/77**

(43) Date of publication of application:
**24.01.79 Bulletin 79/2**

(45) Publication of the grant of the European patent:
**12.08.81 Bulletin 81/32**

(84) Designated Contracting States:
**BE DE FR GB NL SE**

(56) References cited:
**DE - A - 2 518 260**
**FR - A - 2 318 177**
**FR - A - 2 322 159**

**CHEMICAL ABSTRACTS, vol. 75, no. 6,
publ. 9 August 1971
Columbus Ohio USA**

(73) Proprietor: **ICI AUSTRALIA LIMITED
ICI House 1 Nicholson Street P.O.Box 4311
Melbourne Victoria 3001 (AU)**

(72) Inventor: **Englin, Boris
24, Hillcrest Avenue
Chadstone Victoria, 3148 (AU)**

(74) Representative: **Sheller, Alan et al,
Imperial Chemical Industries Limited Legal
Department: Patents Thames House North
Millbank
London SW1P 4QG (GB)**

Courier Press, Leamington Spa, England.

## Vinyl halide polymerization process

The present invention relates to a process for the polymerization of vinyl halide monomers such as vinyl chloride in aqueous dispersion.

By polymerization in aqueous dispersion is meant polymerization in aqueous emulsion or aqueous suspension (including aqueous microsuspension), optionally in the presence of colloids such as polyvinyl alcohol and/or surfactants.

When vinyl halide monomers, particularly vinyl chloride, are polymerized in aqueous dispersion in a reactor it is well known that a problem arises in that the surfaces inside the reactor become coated with tenaciously adhering polymeric material known as build-up. The formation of tenaciously adhering build-up is undesirable from the point of view of achieving efficient heat transfer for cooling and heating the reactor contents, effective usage of monomer, effective control and monitoring of the polymerization reaction, and acceptable polymer quality (in view of contamination by dislodged particles of the build-up).

This deposit, which varies in thickness, hardness and degree of adhesion to the metal is composed of polymer in several different physical forms. The main type, particularly from the standpoint of routine cleaning, is a hard film over the whole surface of the reactor. The thickness of this film varies from batch to batch but is normally a few thousandths of an inch thick. The other types are hard or soft lumps which accumulate locally in the reactor or powder which is more generally distributed. The soft lumps are composed of material that has escaped the washing out process and are comparatively easy to remove. The hard lumps are believed to originate as soft material that has been allowed to stay in the reactor for more than one batch or simply by polymerization of vinyl chloride in an area of very high or very low agitation, i.e. an area where the normal droplet protection of the granulating agent is ineffective. They are normally found in roof ports, on staging brackets, on the impeller, or indeed any area where there is a severe discontinuity to the surface in the reactor. They are very difficult to remove, normally requiring a hammer and chisel. A somewhat similar type of build-up can be formed, when a reactor is inadequately cleaned, by growth on to skin build-up remaining. This type of build-up along with lumps from impellers can detach itself from the reactor wall during a batch and has to be removed manually from the reactor at frequent intervals, otherwise blockage of the valve or slurry transfer lines will result. It is known that the amount of build-up produced is much larger if the reactor is inadequately cleaned. Powder type build-up is often quite firmly attached to the surface and is at its thickest at or above the liquid level in the reactor where it has been deposited by splashing.

Because of the problems in respect of heat transfer, polymerization control and polymer quality, it is necessary to clean the reactor between each polymerization cycle wherein the deposited material is removed as completely as possible, e.g. by scraping by hand, solvent cleaning or pressure-washing. This is wasteful in terms of the expense of the equipment and manpower required to carry out such cleaning and also in terms of the loss of productivity for a given reactor arising from the time taken to effect the cleaning operation.

This formation of build-up, which increases with polymerization time, is also a major difficulty in the development of a trouble-free continuous process for the aqueous dispersion polymerization of vinyl halide monomers such as vinyl chloride.

There have been proposals in the published literature of processes of coating the internal surfaces of reactors used for vinyl halide polymerization with numerous substances, both inorganic and organic, in order to prevent or reduce the formation of build-up therein.

In our experience, we have found that while some substances certainly inhibit the formation of build-up, they tend to form coatings whose adherence to the reactor surface becomes weakened during the course of the polymerization reaction; such coatings are therefore liable to be come partly or wholly detached from the reactor surface during subsequent polymerizations in the reactor leading to the formation of build-up. Consequently it is necessary to recoat the reactor internal surfaces between each polymerization cycle if the anti-build-up action of the coating substance is to be effective in the following polymerizations in the reactor. This adds to the cost of the polymerization process.

We have now discovered a process whereby vinyl halide monomers such as vinyl chloride may be polymerized in aqueous dispersion without any or with very much reduced formation of build-up.

According to the present invention there is provided a process for the polymerization of vinyl halide monomers in aqueous dispersion which process is characterized by the addition to the polymerization reaction medium of a composition comprising metal ions selected from chromium, copper, cobalt, nickel, manganese, tungsten and molybdenum, prior to the start of the polymerization reaction and by the addition to the polymerization reaction medium of an amount of a quinone or a hydroquinone that is less than 0.03% w/w of the vinyl halide monomer during the polymerization reaction.

It is a particular advantage of our process that the composition can be added to the reaction medium without opening the reactor. The reactors used for the polymerization do not need to be opened between each polymerization cycle, either to remove adhering build-up or to apply or remove anti-build-up coatings.

The nature of the composition comprising these ions is not narrowly critical. We have found for example that good results may be obtained using an aqueous solution of the ion in the form of simple salts such as for example, nitrates, sulphates and acetates. Particularly good results are obtained using the chlorides. The ion may also be in the form of complex ions such as amine complexes or complexes of the metallic ion with polyethers.

Typical compositions comprising these metal ions are cuprous chloride, cupric sulphate, nickelous chloride cobaltous chloride, chromic chloride, manganese sulphate and ammonium molybdate. Oxide compositions, for example chromium trioxide and tungsten trioxide, may conveniently be dissolved in dilute acids such as hydrochloric and sulphuric acids. Preferably the composition comprises copper, nickel, and cobalt ions, and most preferably the composition comprises chromium ions. Compositions comprising two or more of the said metal ions may also be used.

It is a surprising feature of the process of our invention that small or catalytic amounts of the metal ions when used according to the process of the invention are effective in inhibiting build-up. The actual amount is not narrowly critical and we have found good results may be obtained if the amounts added are in the range from 0.001% to 0.1% w/w based on the monomer content in the polymerization.

In the process of the invention the metal ion is added to the reaction mixture prior to the polymerization and during the polymerization a solution of a hydroquinone or a quinone, such as hydroquinone itself, benzoquinone or naphthoquinone, is injected into the reaction mixture. The concentration of hydroquinone or quinone is less than 0.03% w/w based on the monomer content, since above this level the polymerization reaction may be inhibited.

The operating conditions for polymerization according to the process of the present invention may be those customarily used. For example, in the case of vinyl chloride polymerization, the temperature is generally below 110°C and typically between 40 and 80°C and the pressure generally below 15 kg/cm². Compositions of metal ions of our invention comprising bromides are preferably used in polymerization processes carried out at temperatures below 60°C.

Although the invention has been described with reference hereinbefore to the polymerization of vinyl chloride, it is also applicable to vinyl halide monomers in general.

By "vinyl halide monomers" is meant those monomers polymerizable by free-radical polymerization which are olefinically unsaturated in the alpha position and substituted by at least one halogen atom. These monomers are preferably selected from substituted derivatives of ethylene and contain only two carbon atoms. Examples of such monomers include vinyl chloride, vinyl bromide, vinyl fluoride, vinylidene chloride, vinylidene fluoride, chlorotrifluoroethylene and tetrafluoroethylene. The invention is preferably applied to the polymerization of fluorine- or chlorine-containing vinyl monomers, especially vinyl chloride.

By "polymerization" is meant both the homopolymerization of the vinyl halide monomers and the copolymerization with each other or with other comonomers copolymerizable therewith. Examples of the latter include vinyl esters such as vinyl acetate, acrylic esters such as methyl acrylate and butyl methacrylate, acrylic nitriles such as acrylonitrile and methacrylonitrile, unsaturated diesters such as diethyl maleate, allyl esters such as allyl acetate, $\alpha$-olefines such a ethylene and propylene, vinyl ethers and styrene compounds.

However, we prefer to apply the invention to the production of polymers containing at least 50% molar, and more particularly at least 80% molar, of units derived from vinyl halide monomers, particularly vinyl chloride.

The process according to the invention may be employed in any polymerization technique where the monomer(s) is dispersed in the form of droplets in a liquid aqueous phase. For example it may be used for polymerization in aqueous emulsion in which case any suitable emulsifying agent such as sodium lauryl sulphonate or sodium dodecyl benzene sulphonate and non-ionic emulsifying agents may be used.

The process of the invention is also most applicable to polymerization in aqueous suspension and microsuspension.

Any suitable dispersing agent may be used for polymerization in aqueous suspension, and particularly finely dispersed solids, gelatin, polyvinyl acetates of various degrees of hydrolysis, water-soluble cellulosic ethers and polyvinyl pyrrolidones. These dispersing agents can be used together with surface-active agents if desired. The amount employed may vary widely and is generally between 0.05 and 1.5% by weight calculated on the amount of water used.

Any suitable free-radical polymerization initiator that is monomer-soluble may be used for polymerization in aqueous suspension. Examples of these include peroxy compounds such as di-tertiary-butyl peroxide, lauroyl peroxide and acetyl cyclohexyl sulphonyl peroxide, t-butyl perpivalate, azo compounds such as azo-bis-isobutyronitrile and 2,2'-azo-bis-2,4-dimethyl-valeronitrile, and boron alkyls. Monomer-soluble free-radical polymerization initiators that are particularly suitable for use in the process according to the invention are the dialkyl peroxydicarbonates whose alkyl radicals contain up to 20 carbon atoms, such as diethyl peroxydicarbonate, diisopropyl peroxydicarbonate and di(tertiarybutyl-cyclohexyl)-peroxydicarbonate, and 2,2'-azo-bis-2,4-dimethylvaleronitrile and azo-bis-iso-butyronitrile. These initiators may be used in conventional quantities — generally speaking from 0.01 to 1% by weight calculated on monomer.

Polymerization in homogenised aqueous dispersion, sometimes known as polymerization in microsuspension, comprises mechanically homogenising an aqueous dispersion of the monomer or monomers in the presence of a surface-active agent (for example by subjecting it to a violent shearing action), and polymerizing the homogenised dispersion in the presence of an initiator that is monomer soluble.

Conventional emulsifying agents and monomer-soluble initiators can be used for polymerization in microsuspension such as for example an ionic emulsifying agent like sodium dodecylbenzenesulphonate, and peroxide initiators of the dialkanoyl peroxide type, e.g. lauroyl peroxide.

In addition to the emulsifying or dispersing agents and initiators, the aqueous dispersions (i.e. suspensions, microsuspensions and emulsions) may contain one or more additives that are normally employed in conventional processes for polymerization in aqueous dispersion. Examples of such additives include particle size regulators, molecular weight regulators, stabilisers, plasticisers, colouring agents, reinforcing agents and processing aids.

The polymerization medium may also contain one or more substances which themselves inhibit polymerization build-up.

Our invention is illustrated by, but by no means limited to the following examples.

### Example 1 (Comparative)
Conventional method used as a control to compare with the improved methods.

A stainless steel pressure vessel of 7 litres nominal capacity equipped with heating and cooling means was charged with 3500 ml of demineralized water, 2.4 g of a peroxydicarbonate catalyst and 1.75 g polyvinyl alcohol (partially hydrolyzed polyvinyl acetate). The contents of the vessel were stirred and the air above the liquid was removed by evacuation. Vinyl chloride monomer (3000 g) was added to the evacuated vessel and the contents were heated to 56°C. The temperature was maintained until pressure drop indicated the end of the reaction of polymerization.

The residual gas was vented off and the slurry of polyvinyl chloride in water was dropped down through the bottom valve. The lid was opened and the remaining loose polymer was rinsed with water and the firm deposition of the polymer inside the autoclave was examined. There was a deposit of polymer firmly attached to the wall, to the stirrer shaft and to the thermometer well. The build-up was particularly prominent at the liquid-gas boundary.

To remove the deposit use of a scraper was necessary. The deposit on the stirrer shaft and on the stirrer blades was particularly hard to dislodge and it was necessary to use a screwdriver with a gentle blow of a hammer to chip off particularly hard portions of the build-up.

The total weight of the deposit constituted 0.6% w/w of the vinyl chloride monomer charged to the autoclave.

### Example 2
The pressure vessel of Example 1 was thoroughly cleaned free from all deposit, washed and dried. The charging procedure of Example 1 was repeated and 5 minutes after vinyl chloride addition, a solution of 0.22 g of copper chloride dihydrate (0.003% w/w copper ion on vinyl chloride charge) in 35 mls water was injected into the polymerization mixture. The vessel contents were heated to the polymerization temperature of 56°C; after one hour at polymerization temperature 0.25 g of hydroquinone in 35 mls of water were injected and the reaction was finished as described in Example 1.

In this batch a deposit not exceeding 0.05% w/w of the initial charge of the monomer remained in the autoclave. This deposit could be readily removed.

### Example 3
The pressure vessel of Example 1 was thoroughly cleaned free from all deposit, washed and dried. The charging procedure of Example 1 was repeated and 5 min after vinyl chloride addition a solution of 0.22 g of copper chloride dihydrate (0.003% w/w copper ion based on vinyl chloride) in 10 ml of water and 0.5 ml concentrated hydrochloric acid was injected into the polymerization mixture.

One hour after the start of the polymerization reaction 0.25 g of hydroquinone in 10 ml of water were injected, followed after one and a half hour by injection of 0.20 g of the sodium nitrite in 10 ml of water. The reaction was then finished as described in Example 1.

In this batch the autoclave walls, lid and gland were very clean and shiny throughout. Only a few minor patches of build-up were found on the shaft and paddle.

The overall amount of the build-up deposit was only 0.2 g, or 0,007% w/w of the initial monomer charge.

### Claims

1. A process for the polymerization of vinyl halide monomers in aqueous dispersion which process is characterised by the addition to the polymerization reaction medium of a composition comprising metal ions selected from chromium, copper, cobalt, nickel, manganese, tungsten and molybdenum, prior to the start of the polymerization reaction and by the addition to the polymerization reaction medium of an amount of a quinone or a hydroquinone that is less than 0.03% w/w of the vinyl halide monomer during the polymerization reaction.

2. A process according to claim 1 wherein the vinyl halide monomer is vinyl chloride.

3. A process according to either claim 1 or claim 2 wherein the metal ion is in the form of a water-soluble salt selected from the nitrate, sulphate, chloride and acetate.

4. A process according to claim 3 wherein the water-soluble salt comprises cupric chloride.

5. A process according to claim 3 wherein the water-soluble salt comprises chromyl chloride.

## Revendications

1. Procédé pour la polymérisation des halogénures de vinyle monomères en dispersion aqueuse, lequel procédé est caractérisé par l'addition, au milieu pour la réaction de polymérisation, d'une composition comprenant des ions de métaux choisis entre le chrome, le cuivre, le cobalt, le nickel, le manganèse, le tungstène et le molybdène avant le début de la réaction de polymérisation et par l'addition, au milieu pour la réaction de polymérisation, d'une quantité d'une quinone ou d'une hydroquinone qui est inférieure à 0,03% poids/poids de l'halogénure de vinyle monomère pendant la réaction de polymérisation.

2. Procédé suivant la revendication 1, dans lequel l'halogénure de vinyle monomère est le chlorure de vinyle.

3. Procédé suivant la revendication 1 ou la revendication 2 dans lequel l'ion de métal se présente sous forme d'un sel hydrosoluble choisi entre le nitrate, le sulfate, le chlorure et l'acétate.

4. Procédé suivant la revendication 3, dans lequel le sel hydrosoluble comprend du chlorure cuivrique.

5. Procédé suivant la revendication 3, dans lequel le sel hydrosoluble comprend du chlorure de chromyle.

## Patentansprüche

1. Verfahren zum Polymerisieren von Vinylhalogenid-Monomeren in wäßriger Dispersion, dadurch gekennzeichnet, daß zu dem Polymerisationsreaktionsmedium vor dem Beginn der Polymerisationsreaktion eine aus Chrom-, Kupfer-, Kobalt-, Nickel-, Mangan-, Wolfram- und Molybdänionen ausgewählte Metallionen enthaltende Zusammensetzung und während der Polymerisationsreaktion eine weniger als 0,03 Gew.-% des Vinylhalogenid Monomers betragende Menge eines Chinons oder eines Hydrochinons hinzugegeben wird.

2. Verfahren nach Anspruch 1, worin das Vinylhalogenid-Monomer Vinylchlorid ist.

3. Verfahren nach Anspruch 1 oder Anspruch 2, worin das Metallion in Form eines aus dem Nitrat, Sulfat, Chlorid und Acetat ausgewählten, wasserlöslichen Salzes eingesetzt wird.

4. Verfahren nach Anspruch 3, worin das wasserlösliche Salze Kupfer(II)-chlorid enthält.

5. Verfahren nach Anspruch 3, worin das wasserlösliche Salz Chromylchlorid enthält.